# EUROPEAN PATENT APPLICATION

(11) **EP 4 851 699 A2**
(43) Date of publication of application: **09.12.2026**
(21) Application number: 26181742.3
(22) Date of filing: 28.05.2026
(51) Int. Cl.: G02B 27/01

(54) **DROP PROTECTION COMPONENTS FOR AUGMENTED-REALITY GLASSES**

(30) Priority: 02.06.2025 US 202563816485 P
(71) Applicant: Meta Platforms Technologies, LLC, Menlo Park, CA 94025 (US)
(72) Inventor: OCKFEN, Alex, Menlo Park, 94025 (US); SAWYER, Kevin, Menlo Park, 94025 (US); CANALES, Pablo Castillo, Menlo Park, 94025 (US); ELABBASI, Nagi, Menlo Park, 94025 (US); FARRELL, Richard, Menlo Park, 94025 (US); WEST, Rodney, Menlo Park, 94025 (US); RIECK, Ryan, Menlo Park, 94025 (US)
(74) Representative: Murgitroyd & Company

(57) **Abstract**

A display assembly for a pair of augmented-reality glasses is described. The display assembly includes an optical stack and a display projector assembly that is configured to present an augmented-reality experience via a portion of the optical stack at the augmented-reality glasses. The optical stack includes one or more lenses and a first interface material at a perimeter of the optical stack. The first interface material separates the optical stack from directly contacting a frame of the augmented-reality glasses. Additionally, a portion of the display projector assembly is suspended within a second interface material that is less stiff than the first interface material.

## Description

### TECHNICAL FIELD

This relates generally to drop protection components and display-generation alignment components for augmented-reality glasses.

### BACKGROUND

Traditional augmented-reality glasses can be damaged when dropped or when an external force is applied. Specifically, the components associated with display generation components (such as a display projector assembly and a corresponding waveguide that displays images produced by the display projector assembly) are susceptible to damage, and these components are generally more fragile and more expensive than other components of the augmented-reality glasses.

Additionally, traditional methods of assembling augmented-reality glasses rely on skilled manual placement and adhesive bonding of components into predefined compartments or recesses within a frame of a pair of traditional augmented-reality glasses. Due to manufacturing constraints, these predefined compartments and the associated components have tolerances (e.g., the predefined compartments are oversized to ensure the associated components can be inserted), which can result in poor alignment of the various components. This can be particularly problematic for display generation components because poor optical alignment of such components can result in poor image quality, visual distortion, or user discomfort. Even when correctly assembled (and this is not guaranteed with traditional assembly methods), only the adhesive bonding between the components and between the components and between the frame of the augmented-reality glasses is maintaining alignment of the components. If the adhesive weakens or otherwise fails, the components will drift out of alignment over time (or as a result from an external force, such as a drop event).

Additionally, shock absorption in waveguide assemblies can be handled through increasing the volume of compliant materials surrounding the assembly (thereby increasing the size and weight), increasing the overall strength of the assembly, or adding passive shock absorbing springs around the assembly. Augmented-reality eyepieces are often made of brittle materials which are susceptible to fracture from typical use case scenarios, similar to what would be seen in the portable consumer electronics industry. Dropping augmented-reality smart glasses from 1.5-2m heights on a variety of surfaces can result in eyepiece failures unless the eyepiece is significantly reinforced or the shock is sufficiently managed. Current strategies to protect eyepiece assemblies involve adding a significant amount of material that is compliant and has favorable mechanical properties to absorb Newtonian shock impulses over a variety of conditions. The problem with this approach is that it requires adding extra weight and size to the eyepiece assembly which can surpass desired weight and size limits.

As such, there is a need to address these above-identified challenges. A brief summary of solutions to the issues noted above are described below.

### SUMMARY

As will be described in detail below, a solution to the issue of damaging the display generation components recited above includes coupling the optical stack to the frame of a pair of augmented-reality glasses via a first interface material (that has a first stiffness) and coupling the display projector assembly to the frame of the augmented-reality glasses via a second interface material (that has a second stiffness). The stiffness of the first interface material and the second interface material can be tuned to minimize the likelihood of damage to the optical stack and/or the display projector assembly. Furthermore, a solution to the issue of alignment of components of the augmented-reality glasses includes a waveguide having an alignment fiducial and other components (e.g., a first lens, a second lens, a display projector assembly, and/or a frame) aligning with the alignment fiducial of the waveguide. In this way, the waveguide is configured so that components coupled to the waveguide remain aligned to the waveguide such that a minimum optical alignment is maintained, thereby improving image quality and user experience.

According to a first aspect, there is provided a display assembly for a pair of augmented-reality glasses, comprising: an optical stack including one or more lenses and a first interface material at a perimeter of the optical stack, wherein the first interface material separates the optical stack from directly contacting a frame of the pair of augmented-reality glasses; a display projector assembly, a portion of which is suspended within a second interface material that is less stiff than the first interface material; and the display projector assembly is configured to present an augmented-reality experience via a portion of the optical stack at a pair of augmented-reality glasses.

The first interface material may be segmented and configured such that the optical stack couples to a frame of the augmented-reality-glasses via segments of the first interface material.

The first interface material may be continuous and configured such that the optical stack couples to the frame of the augmented-reality-glasses via the first interface material.

The first interface material and/or the second interface material may be configured to reduce the transmission of vibrations to the optical stack and/or the display projector assembly, respectively.

The first interface material may have a first shore value that is higher than a second shore value of the second interface material.

A stiffness of the first interface material may be based on a mass of the optical stack. A stiffness of the second interface material may be based on a mass of the display projector assembly.

The optical stack may include: a waveguide configured to display an image; a first lens configured to adjust the image from the waveguide so that it appears a specified distance from a user; and a second lens configured to counteract the first lens such that a worldview, distinct from the image, is not distorted when viewed through both the first lens and the second lens. The waveguide may be between the first lens and the second lens.

The optical stack may further include an eye tracking device including an eye-tracking sensor and a plurality of light sources at a perimeter of the optical stack.

The first interface material may be configured to prevent water intrusion into the optical stack. The second interface material may be configured to prevent water intrusion into the display projector assembly.

The first interface material may be a high-density foam. The second interface material may be a low-density foam.

The first interface material and/or the second interface material may be a graphite-based material.

The display projector assembly may be suspended within a frame of the augmented-reality-glasses via the second interface material such that one or more airgaps are formed between the display projector assembly and the frame of the augmented-reality glasses.

The second interface material may be air such that the portion of the display projector assembly is suspended in air.

The display projector assembly may be suspended within a lug between the frame and a hinge for a temple arm.

The display assembly may be incorporated into a pair of augmented-reality glasses.

According to a second aspect, there is provided a pair of augmented-reality glasses, comprising: an optical stack including: a waveguide having an alignment fiducial; a first lens aligned with the waveguide via the alignment fiducial; a second lens aligned with the waveguide via the alignment fiducial; a display projector assembly configured to be coupled to the optical stack via the alignment fiducial, wherein the optical stack and the display projector assembly are configured to present an augmented-reality experience at the pair of augmented-reality glasses; and a frame, wherein the alignment fiducial aligns the optical stack within the frame.

Inserting the optical stack into the frame of the augmented-reality glasses may maintain alignment of the optical stack via the alignment fiducial such that the first lens, the second lens, and the waveguide remain aligned.

Inserting the optical stack into the frame of the augmented-reality glasses may further maintain alignment of the optical stack and the display projector assembly.

The alignment fiducial may be configured to maintain alignment of the optical stack, display projector assembly, and frame during a drop event impacting the pair of augmented-reality glasses.

The alignment fiducial may be a first alignment fiducial. The waveguide may include a second alignment fiducial for alignment of the first lens, the second lens, the display projector assembly, and/or the frame.

The first alignment fiducial and the second alignment fiducial may constrain the relative three-dimensional orientations of the optical stack, the display projector assembly, and the frame.

By placing Young's modulus and preload force tunable shock absorbing springs normal to the polished surface of the eyepiece, and perpendicular to the long axis of the eyepiece: shock is absorbed significantly; shock is prevented from reaching the weakest regions of the eyepiece (edges); this design methodology adds little or no additional size and weight as it can be incorporated into a frame holding the eyepiece; the frame can improve aesthetics and can inhibit (reduce or prevent) abrupt point load impacts to the eyepiece edges; compressive stresses in the plane and location where the spring is located do not distort the optical field as they are out of plane and sufficiently spaced from waveguide image transmission regions; the brittle eyepiece material, having ceramic properties, is strong enough to support these compressive forces over a large operating range; and these compressive forces also result in greater overall eyepiece integrity through increasing friction between eyepiece elements and may result in the ability to remove or reduce adhesive layers and other ancillary materials/weight from the assembly

The shock absorbing eyepiece stack may be implemented in any of the following ways: a compliant gasket material on each side of the eyepiece (user facing and world facing); a frame material that provides uniform pressure and compression around the gasket through: a tunable mechanism such as a screw, a material that is heated and then placed around the gasket and cooled (e.g., resulting in thermal compression), and/or a material that is mechanically expanded, placed around gasket, and released (e.g., providing compression through stored mechanical energy).

The present disclosure may be applied to any consumer electronic device, especially waveguide displays, which often contain brittle materials.

The devices and/or systems described herein can be configured to include instructions that cause the performance of methods and operations associated with the presentation and/or interaction with an extended-reality (XR) headset. These methods and operations can be stored on a non-transitory computer-readable storage medium of a device or a system. It is also noted that the devices and systems described herein can be part of a larger, overarching system that includes multiple devices. A non-exhaustive of list of electronic devices that can, either alone or in combination (e.g., a system), include instructions that cause the performance of methods and operations associated with the presentation and/or interaction with an XR experience include an extended-reality headset (e.g., a mixed-reality (MR) headset or a pair of augmented-reality (AR) glasses, as two examples), a wrist-wearable device, an intermediary processing device, a smart textile-based garment, etc. For example, when an XR headset is described, it is understood that the XR headset can be in communication with one or more other devices (e.g., a wrist-wearable device, a server, intermediary processing device) which together can include instructions for performing methods and operations associated with the presentation and/or interaction with an extended-reality system (i.e., the XR headset would be part of a system that includes one or more additional devices). Multiple combinations with different related devices are envisioned, but not recited for brevity.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

Having summarized the above example aspects, a brief description of the drawings will now be presented.

### BRIEF DESCRIPTION OF THE DRAWINGS

For a better understanding of the present disclosure, reference should be made to the Detailed Description below, in conjunction with the following drawings in which like reference numerals refer to corresponding parts throughout the figures.
Figure 1A-1B illustrates an example pair of augmented-reality glasses that include an optical stack with one or more interface materials and one or more alignment fiducials.
Figure 2 illustrates a cross-sectional view of an optical stack coupled to a frame of the augmented-reality glasses.
Figure 3 illustrates a cross-sectional view of the optical stack coupled to the frame of the augmented-reality glasses.
Figures 4A, 4B, 4C-1, and 4C-2 illustrate example MR and AR systems.
Figure 5 illustrates an optical stack that is configured to distribute forces away from sensitive components of the optical stack.
Figure 6 illustrates an example in which flexures and bumpers are placed around portions of the load bearing perimeter regions (e.g., the first side perimeter region 502A and the second side perimeter region 502B described in reference to Figure 5).
Figure 7 illustrates different mounting techniques for securing the sensitive components of the optical stack, such that they are minimal impacted by external forces.
Figure 8 illustrates another example in which a shock absorbing material is placed around the optical stack to reduce forces transmitted to the optical stack.
Figure 9 illustrates an additional technique in which the waveguide is further isolated from impacts via a series of isolators.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the examples illustrated in the accompanying drawings. However, some examples may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the examples described herein.

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semitransparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera set up in the surrounding environment)). "In-air" generally includes gestures in which the user's hand does not contact a surface, object, or portion of an electronic device (e.g., a head-wearable device or other communicatively coupled device, such as the wrist-wearable device), in other words, the gesture is performed in open air in three-dimensional (3D) space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple of examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)) is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by examples described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various examples described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, and other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth Low Energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors (used interchangeably with neuromuscular-signal sensors); (iii) IMUs for detecting, for example, angular rate, force, magnetic fields, and/or changes in acceleration; (iv) heart rate sensors for measuring a user's heart rate; (v) peripheral oxygen saturation (SpO₂) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; and (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

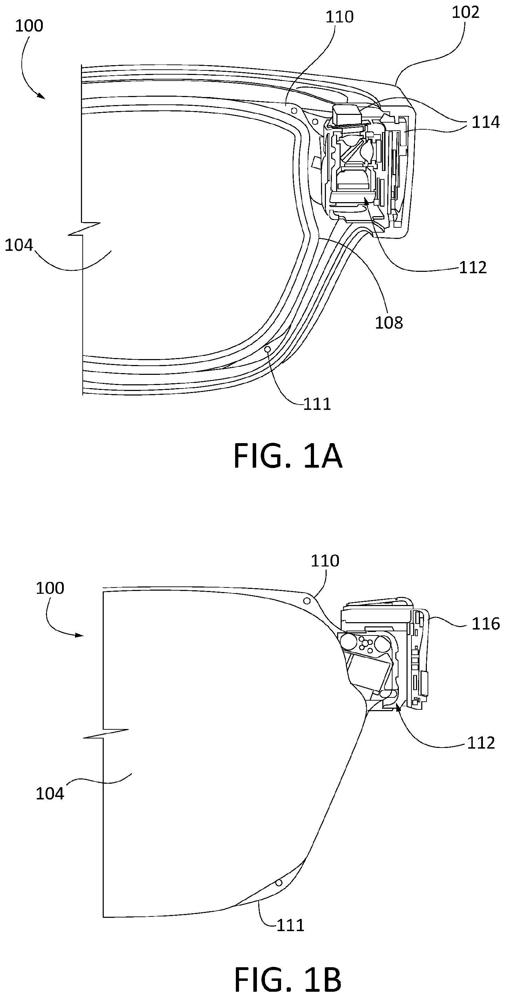

Figure 1A-1B illustrates an example pair of augmented-reality glasses that include an optical stack with one or more interface materials and one or more alignment fiducials. The augmented-reality glasses 100 includes a frame 102. An optical stack 104 is configured to couple to the frame 102 via a first interface material 108 with a first stiffness (e.g., a high-density foam), and a display projector assembly 112 is configured to couple to the frame 102 via a second interface material 114 with a second stiffness (e.g., a low-density foam). The first interface material 108 and/or the second interface material 114 can reduce the transmission of vibrations to the optical stack 104 and/or the display projector assembly 112, respectively. In some examples, the second interface material 114 is less stiff than the first interface material 108 (e.g., the second interface material 114 has a lower shore value than the first interface material 108). The stiffness and/or shore value of the first interface material 108 and/or the second interface material 114 can be tuned based on the characteristics of the optical stack 104 and/or the display projector assembly 112. Such characteristics can include physical characteristics (e.g., mass, weight, center of mass, center of gravity, strength, brittleness), expected external forces (e.g., forces due to a drop event), susceptibility to damage (e.g., from a drop event), mounting configuration, or other characteristics of the optical stack 104 and/or the display projector assembly. For example, in the example illustrated by Figure 1A, the stiffness of the first interface material 108 is based on the mass of the optical stack 104 and the stiffness of the second interface material 114 is based on the weight of the display projector assembly 112. In this example, the stiffness of the first interface material 108 is greater than the second interface material 114 because the optical stack 104 has a greater mass than the display projector assembly.

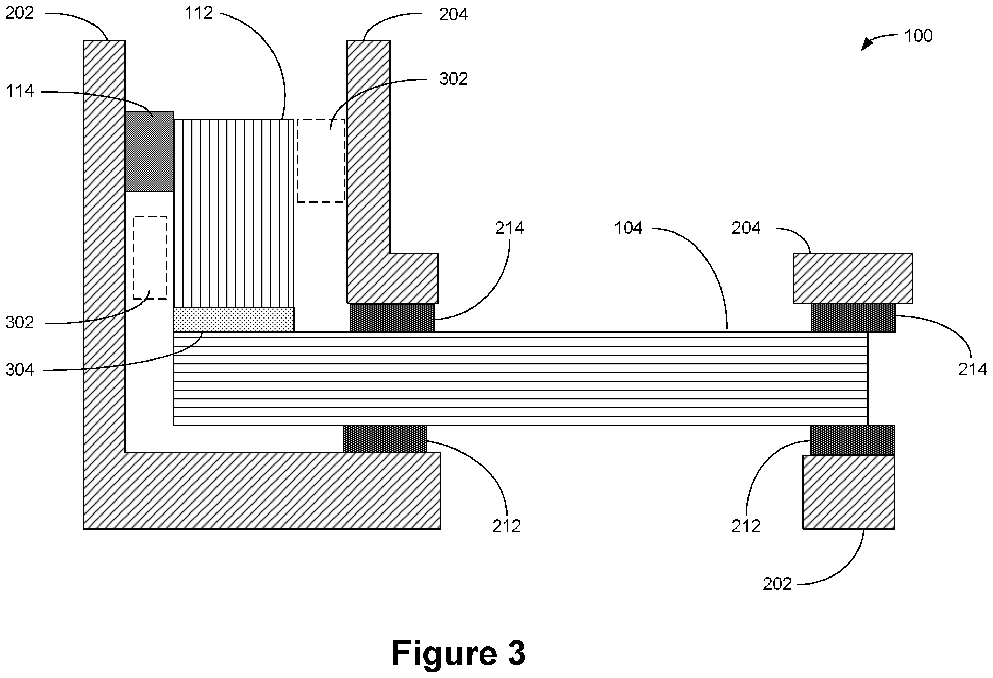

As shown in Figure 1A, the first interface material 108 is configured to form a continuous loop around the optical stack 104. For example, an edge of the optical stack 104 is coupled to the continuous loop of the first interface material 108, which is then coupled to the frame 102. The continuous loop can include little to no airgaps between the optical stack and the frame 102. The continuous loop may also be configured to prevent water intrusion or ingress into the frame 102, the optical stack 104, and/or the display projector assembly 112. In some examples, the first interface material 108 can include airgaps, which are discussed in greater detail with respect to Figure 3.

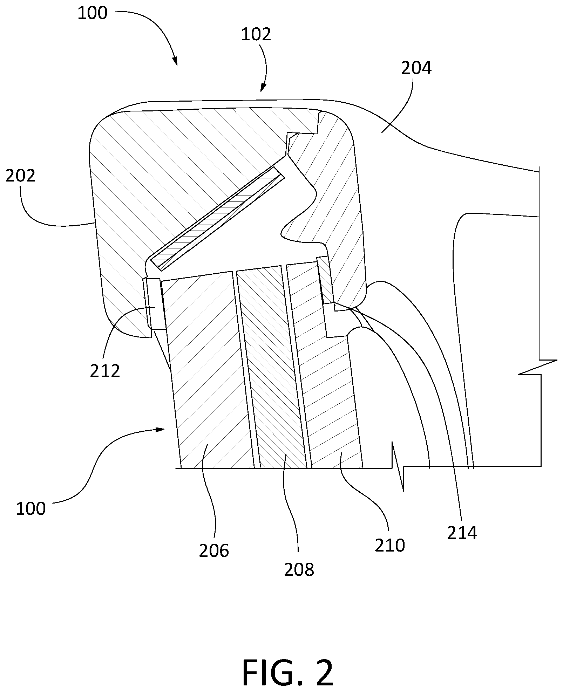

In some examples, the optical stack 104 includes a VID1 lens, a waveguide, and/or a VID2 lens (shown in more detail in Figure 2). For example, the VID2 lens is coupled to the world side of the waveguide and a VID1 lens is coupled to a user side of the waveguide. The VID1 lens and the VID2 lens may be coupled to the waveguide via an adhesive (e.g., a liquid optically clear adhesive).

As shown in Figure 1B, the optical stack 104 includes alignment fiducials (e.g., first alignment fiducial 110 and a second alignment fiducial 111), where the alignment fiducials are configured to align the optical stack 104 with the display projector assembly 112 and/or with the frame 102. For example, the alignment fiducials align the optical stack 104 with the display projector assembly 112 when coupled outside the frame 102 such that the alignment fiducials constrain the possible relative positions of the optical stack 104 and the display projector assembly 112. In this example, when the optical stack 104 and the display projector assembly 112 are inserted into the frame 102, the alignment fiducials further constrain the possible relative positions of the optical stack 104, display projector assembly 112, and the frame 102.

In some examples, the alignment fiducials are part of the waveguide, the VID1 lens, and/or the VID2 lens. For example, alignment fiducials that are part of the waveguide enable alignment of the display projector assembly 112 to the waveguide to maintain optical alignment between the waveguide and the display projector assembly 112. In this way, the image produced by the display projector assembly 112 and displayed at the waveguide remains clear (e.g., not distorted and/or without artifacts).

In some examples, the display projector assembly 112 is thermally coupled to the frame 102 via thermal connection 116 (e.g., graphite). As shown in Figure 1B, the thermal connection 116 can be coupled to the display projector assembly 112, wrapped around the second interface material 114, and coupled to the frame 102. For example, heat generated at the display projector assembly 112 is transferred to a front graphite heat sink of the frame 102. In some examples, the second interface material includes graphite and is part of the thermal connection 116.

Figure 2 illustrates a cross-sectional view of an optical stack coupled to the frame 102 of the augmented-reality glasses 100. As shown in Figure 2, the frame 102 includes a world-side portion 202 and a user-side portion 204; and (as discussed above with respect to Figure 1) the optical stack 104 includes a VID2 lens 206, a waveguide 208, and a VID1 lens 210. In some examples, the VID1 lens 210 is configured to adjust the image from the waveguide 208 so that the image appears a specified distance from the user, and the VID2 lens 206 is configured to counteract the optical effects of the VID1 lens 210, such that the world view is not distorted (or minimally distorted) when viewed through both the VID1 lens 210 and the VID2 lens 206.

In some examples, the first interface material (e.g., the firsts interface material 108 of Figure 1) includes a world-side portion 212 configured to couple the optical stack 104 to the world-side portion 202 of the frame 102, and a user-side portion 214 configured to couple the optical stack 104 to the user-side portion 204 of the frame 102. The world-side portion 212 and the user-side portion 214 of the first interface material can be the same or different stiffnesses, and/or the same or different materials. In some examples, the world-side portion 212 and the user-side portion 214 of the first interface material can be the same or different thicknesses.

Figure 3 illustrates an overhead cross-sectional view of the optical stack 104 coupled to the frame of the augmented-reality glasses 100. As shown in Figure 3, the display projector assembly 112 is coupled only to the world-side portion 202 of the frame 102, and includes no direct coupling between the display projector assembly 112 and the user-side portion 204 of the frame 102. In some examples, airgaps 302 are formed between the frame 102 and the display projector assembly 112 and/or the optical stack 104. These airgaps 302 allow the display projector assembly 112 to move relative to the frame 102 without interference.

In some examples, the first interface material (e.g., the world-side portion 212 of the first interface material 108 and the user-side portion 214 of the first interface material 108) is segmented. For example, as shown in Figure 3, the world-side portion 212 and the user-side portion 214 of the first interface material 108 are formed in segmented blocks at specified locations. The locations of the segmented blocks can be approximately opposed (e.g., a pair of user-side and a world-side segmented blocks of the first interface material 108 are positioned approximately across each other relative to the optical stack 104), or can be positioned at any position between the optical stack 104 and the frame 102.

In some examples, the display projector assembly 112 is coupled to the world-side portion 202 of the frame 102 via the second interface material 114. The second interface material 114 can be configured to transfer heat that is generated at the display projector assembly 112 to the world-side portion 202 of the frame 102. In this way, the heat from the display projector assembly 112 is dissipated to the environment instead of toward a user/wearer of the augmented-reality glasses 100. For example, the second interface material 114 can be a graphite-based material, where the graphite component can increase thermal conductivity through the second interface material 114.

In some examples, the display projector assembly 112 is configured to couple to the optical stack 104 via connection 304. In some examples, the connection 304 is a mechanical and optical connection between the display projector assembly 112 and the waveguide of the optical stack 104. In some examples, the connection 304 is a mechanical connection of the display projector assembly 112 and the VID1 lens of the optical stack 104 and an optical connection of the display projector assembly 112 and the waveguide of the optical stack 104.

(A1) In some examples, a display assembly for a pair of augmented-reality glasses includes an optical stack (e.g., the optical stack 104, as shown in Figures 1A-1B and 3) and a display projector assembly (e.g., the display projector assembly 112, as shown in Figures 1A-1B and 3) that is configured to present an augmented-reality experience via a portion of the optical stack of the augmented-reality glasses. The optical stack includes one or more lenses (e.g., the VID1 lens 210 and/or the VID2 lens 206, as shown in Figure 2) and a first interface material (e.g., the first interface material 108, as shown in Figures 1A, and/or the world-side portion 212 and/or the user-side portion 204 of the first interface material, as shown in Figures 2-3) at a perimeter of the optical stack. The first interface material separates the optical stack from directly contacting a frame (e.g., the frame 102, as shown in Figures 1A and 2, the world-side portion and the user-side portion) of the pair of augmented-reality glasses. Moreover, a portion of the display projector assembly is suspended within the second interface material (e.g., the second interface material 114, as shown in Figures 1 and 3, and/or the airgaps 302 as shown in Figure 3) that is less stiff than the first interface material.

One skilled in the art would understand that the display assembly may also be used with a monocular augmented-reality (AR) system and/or a binocular AR system. For example, the display assembly can be used with a pair of AR glasses with a single display assembly. In another example, the display assembly can be used with a pair of AR glasses with two display assemblies (e.g., a first display assembly for a user's left eye and a second display assembly for the user's right eye).

In some examples, the first interface material is configured to dampen vibrations and/or forces before it reaches the optical stack so that the optical stack is less likely to be damaged or become misaligned. Such damage or misalignment can be expensive to repair and/or degrade the user experience of the AR glasses. The first interface material can be constructed from one or more materials, including foam, rubber, plastic, and/or other materials configured to dampen or eliminate transmission of the vibrations and forces. In some examples, the first interface material includes a specified geometry to dampen the vibrations and forces.

In some examples, a perimeter of the optical stack is configured to couple to the first interface material that is configured to couple to a frame of the AR glasses. For example, the optical stack is inserted into a frame of the AR glasses such that the first interface material is between the frame and the optical stack (e.g., as shown in Figures 2-3).

In some examples, the display projector assembly projects light and/or images to a waveguide such that an image is displayed at the waveguide and can be viewed by the user. As discussed in greater detail below, the image that is displayed by the waveguide can be viewed through the VID1 lens such that the image appears a specified distance away from the user.

In some examples, the second interface material is less stiff than the first interface material because of the material properties of the respective interface materials (e.g., the second interface material 114 is less stiff than the first interface material 108 as shown in Figure 1A). In some examples, the second interface material is less stiff than the first interface material because of geometry differences (e.g., different dimensions, shapes, etc.) between the first interface material and the second interface material. For example, the first interface material and the second interface material are composed of the same material and the first interface material has a greater cross-sectional area (e.g., the first interface material is thicker) than the second interface material. In this example, the first interface material is stiffer than the second interface material because it has a greater cross-sectional area.

(A2) In some examples of A1, the first interface material is segmented and configured such that the optical stack couples to a frame of the augmented-reality glasses via segments of the first interface material (e.g., as shown in Figure 3).

In some examples, the first interface material is segmented (e.g., not continuous) around the perimeter of the optical stack. For example, the first interface material includes a plurality of segments separate from one another In some examples, each segment of the plurality of segments has the same size/dimensions. For example, the plurality of segments is identically and evenly positioned around the perimeter of the optical stack. In another example, the plurality of segments is identical and positioned around the perimeter based on reducing the vibrations or forces from the rest of the AR glasses (e.g., other components of the AR glasses) to the optical stack. In some examples, each segment of the plurality of segments has a different size/dimensions. For example, a first segment of the plurality of segments is a first size, and a second segment of the plurality of segments is a second size that is different from the first size. The size can be based on the segment's location along the perimeter. The size can also be based on the segment's proximity to other components of the augmented-reality glasses. For example, a segment of the first interface material that is closer to a display projector assembly may be larger than another segment of the first interface material that is farther away from the display projector assembly. The segment of the first interface material that is closer to the display projector assembly may be greater because there are more vibrations or greater forces generated by the mass of the display projector assembly during a drop event. In another example, a segment of the first interface material that is proximate to a thin part of a frame of the augmented-reality glasses is larger than another segment of the first interface material that is proximate to a hinge/lug portion of the augmented-reality glasses, in part because the thin part of the frame has less inertial dampening than the hinge/lug portion. In this way, the total quantity of the first interface material is reduced by targeted dampening. The targeted dampening can be based on mass or other physical characteristics (e.g., mass, mounting configuration, or other physical characteristics) of the components proximate to the optical stack.

(A3) In some examples of any of A1-A2, the first interface material is continuous and configured such that the optical stack couples to the frame of the augmented-reality glasses via the first interface material (e.g., as shown in Figure 1A).

In some examples, the first interface material is continuous (e.g., without breaks) around the perimeter of the optical stack. For example, the first interface material fully wraps around the optical stack such that when the optical stack is mounted into the AR glasses, the first interface material is between the optical stack and the AR glasses. In this example, the optical stack contacts the AR glasses via the first interface material. The optical stack can, optionally, contact the display projector assembly that is at least partially coupled to the second interface material.

(A4) In some examples of any of A1-A3, the first interface material and/or the second interface material are configured to reduce the transmission of vibrations to the optical stack and/or the display projector assembly, respectively.

In some examples, the first interface material and the second interface material reduce transmission of vibrations or forces to the optical stack and the display projector assembly, respectively, during a drop event. For example, the first interface material and the second interface material absorb forces transmitted to the AR glasses when the AR glasses are dropped. In another example, the first interface material and the second interface material absorb vibrations during transportation (e.g., vibrations from a vehicle).

(A5) In some examples of any of A1-A4, the first interface material has a first shore value that is higher than a second shore value of the second interface material.

(A6) In some examples of any of A1-A5, a stiffness of the first interface material is based on a mass of the optical stack and a stiffness of the second interface material is based on a mass of the display projector assembly.

In some examples, the characteristics include mass, geometry, sensitivity to vibrations and/or forces (e.g., brittleness, alignment, and/or other characteristics that would render the component inoperable). The respective stiffnesses of the first interface material and the second interface material are based on the aforementioned characteristics. For example, the optical stack is more sensitive to vibrations and/or forces, and as such, the first interface material is stiffer so that more vibrations and forces are dampened or eliminated. In another example, the display projector assembly is more durable and less sensitive to vibrations and/or forces, and as such, the second interface material is less stiff. In this second example, the second interface material, while being less stiff than the first interface material, still dampens and/or eliminates vibrations and/or forces from reaching the display projector assembly. In some examples, the stiffness of the interface material is based on the resonance of the coupled object. For example, the stiffness of the first interface material is tuned so that the combined assembly with the optical stack has a desired resonance frequency (e.g., a frequency that the AR glasses are unlikely to be subjected to). In another example, the stiffness of the second interface material is tuned so that when combined with the display projector assembly, the total assembly also has a desired resonance frequency (that can be the same as, or different from, the desired resonance frequency of the optical stack and first interface material combination). In some examples, the stiffness of the first interface material and the second interface material correspond to each other (e.g., the stiffness of the first interface material is correlated, positively or negatively, with the stiffness of the second interface material).

(A7) In some examples of any of A1-A6, the optical stack includes a waveguide (e.g., the waveguide 208 as shown in Figure 2) that is configured to display an image, a first lens (e.g., the VID1 lens 210, as shown in Figure 2), and a second lens (e.g., the VID2 lens 206, as shown in Figure 2). The first lens is configured to adjust the image from the waveguide so that it appears a specified distance from a user. The second lens is configured to counteract the first lens such that a world view, distinct from the image, is not distorted when viewed through both the first lens and the second lens. Moreover, the waveguide is between the first lens and the second lens.

In some examples, the optical stack includes a first visual image distance (VID1) lens (e.g., the VID1 lens 210, as shown in Figure 2), a second visual image distance (VID2) lens (e.g., the VID2 lens 206, as shown in Figure 2), a waveguide (e.g., the waveguide 208 as shown in Figure 2), and adhesive coupling one or more of the aforementioned components. The VID1 lens is configured so that an image that is displayed at the waveguide appears at a specified distance (e.g., six inches, one foot, five feet, ten feet, 30 feet, and/or any other distance) from a user, and the VID2 lens counteracts the VID1 lens so that a world view viewed through both the VID1 and VID2 lenses is not distorted. For example, an image (that is projected by a display projector assembly and displayed via the waveguide) that is viewed through the VID1 lens appears to be five feet away from the user. In this example, the VID2 lens counteracts the VID1 lens so that the world view (e.g., light that passes through the optical stack other than the image displayed via the waveguide) is not distorted (or minimally distorted, less than 10%, 5%, 1%, or some other percentage of distortion) and appears to its actual distance away (e.g., objects in the environment appear at a distance away from the user that corresponds to its actual distance away to the user). In some examples, the VID2 lens does not interact with the image displayed via the waveguide. For example, the VID2 lens is positioned behind the waveguide relative to a user's eyes, such that the light/image from the waveguide only passes through the VID1 lens before reaching the user.

One skilled in the art would understand that the VID1 lens, VID2 lens, and waveguide can include one or more lenses and/or other components. For example, the VID1 lens and/or the VID2 lens can include two or more lenses, which can improve the optical quality of the VID1 lens and/or the VID2 lens.

In some examples, the optical stack includes an eye-tracking component that tracks a position and/or direction of a user's gaze based on light from the eye-tracking component reflecting off the user's eyes and captured by the eye-tracking component.

(A8) In some examples of any of A1-A7, the optical stack includes an eye-tracking device including an eye-tracking sensor and a plurality of light sources at a perimeter of the optical stack.

(A9) In some examples of any of A1-A8, the first interface material is configured to prevent water intrusion into the optical stack and/or the second interface material is configured to prevent water intrusion into the display projector assembly. In some examples, the first interface material and/or the second interface material prevent water or dust intrusion into the AR glasses. For example, the interface materials act as a sealant around the optical stack and the display projector assembly.

(A10) In some examples of any of A1-A9, the first interface material is a high-density foam, and the second interface material is a low-density foam.

(A11) In some examples of any of A1-A10, the first interface material and/or the second interface material is a graphite-based material.

In some examples, the first interface material and/or the second interface material include an adhesive (e.g., a pressure-sensitive adhesive). For example, the pressure-sensitive adhesive includes graphite. The graphite can improve thermal conductivity through the interface material. In this way, the heat can be transferred from the optical stack and/or the display projector assembly to the frame (or other heat-dissipating components of the AR glasses).

(A12) In some examples of any of A1-A11, the display projector assembly is suspended within a frame of the augmented-reality glasses via the second interface material such that one or more airgaps (e.g., the airgap(s) 302, as shown in Figure 3) are formed between the display projector assembly and the frame of the augmented-reality glasses.

In some examples, the airgaps between the display projector assembly and the frame of the AR glasses reduce the vibrations transmitted to the display projector assembly by allowing some movement of the display projector assembly relative to the rest of the AR glasses. For example, during a drop event, the second interface material may slightly yield so that the display projector assembly is not abruptly jerked, thereby reducing the stresses felt by the display projector assembly. In this example, the second interface material does not deform, and the display projector assembly is returned back to its original position following the drop event such that it is still aligned with the optical stack. In some examples, the second interface material is positioned at hardened points of the display projector assembly (e.g., parts of the display projector assembly that are configured to further absorb vibrations and/or forces that are transmitted through the second interface material).

(A13) In some examples of any of A1-A12, the second interface material is air (e.g., the second interface material 114, as shown in Figures 1A and 3, and/or the airgap(s) 302, as shown in Figure 3) such that the portion of the display projector assembly is suspended in air.

(A14) In some examples of any of A1-A13, the display projector assembly is suspended within a lug between the frame and a hinge for a temple arm.

(B1) In some examples, a pair of augmented-reality glasses is configured corresponding to any one of A1-A14.

(C1) In some examples, a system includes one or more wrist-wearable devices and a pair of augmented-reality glasses, and the augmented-reality glasses are configured corresponding to any one of A1-A14.

(D1) In some examples, a pair of augmented-reality glasses include an optical stack (e.g., the optical stack 104, as shown in Figures 1A-1B and 3), a display projector assembly (e.g., the display projector assembly 112, as shown in Figures 1A-1B and 3), and a frame (e.g., the frame 102, as shown in Figures 1A and 2, the world-side portion and the user-side portion). The optical stack includes a waveguide (e.g., the waveguide 208 as shown in Figure 2) having an alignment fiducial (e.g., alignment fiducial 110 and/or alignment fiducial 111, as shown in Figure 1B, a first lens (e.g., the VID1 lens 210, as shown in Figure 2), and a second lens (e.g., the VID2 lens 206, as shown in Figure 2). The first lens is aligned with the waveguide via the alignment fiducial, and the second lens is aligned with the waveguide via the alignment fiducial. The display projector assembly is configured to be coupled to the optical stack via the alignment fiducial. Moreover, the optical stack and the display projector assembly are configured to present an augmented-reality experience via the pair of augmented-reality glasses. The optical stack is aligned within the frame via the alignment fiducial.

In some examples, the first lens is a first visual image distance (VID1) lens, and the second lens is a second visual image distance (VID2) lens. As discussed above, the VID1 lens is configured so that an image displayed at the waveguide appears at a specified distance from a user, and the VID2 lens is configured to counteract the VID1 lens so that a world view is not distorted so that objects in the world view appear at the correct relative distance to the user.

In some examples the alignment fiducial is configured to align the waveguide, the VID1 lens, and the VID2 lens. In some examples, the alignment fiducial is a specified shape that interfaces/indexes with the first lens and/or the second lens so that the respective lenses are coupled with the waveguide in the correct relative positions. For example, the alignment fiducial is a portion of the waveguide that extends beyond a viewing area where the image from the display projector assembly is displayed (e.g., as shown in Figures 1A-1B). This portion has a specified shape that is configured to interface/index with a corresponding shape at the first lens and the second lens. In this example, a portion of the first lens and a portion of the second lens include a corresponding shape (e.g., an opposite or negative shape) that indexes to the alignment fiducial. One example is a recessed area or lip at the respective lens so that the waveguide and the respective lenses are aligned/indexed when the waveguide is sandwiched between the lenses. In this example, the waveguide is recessed within the lenses such that most of the waveguide is encased by the lenses. Such encasement can also increase the alignment between the waveguide and the lenses by further constraining the movement of the waveguide relative to the lenses and can increase the drop protection by the first lens and the second lens acting to dampen vibrations and/or forces from reaching the waveguide.

In another example, the alignment fiducial is a lip at the edge of the waveguide that extends outwards on both the user side and the world side of the waveguide so that a corresponding edge of the first lens and a corresponding edge of the second lens index with the alignment fiducial. When the alignment fiducial of the waveguide and corresponding edges of the first lens and the second lens are coupled, the first lens, waveguide, and second lens sandwich is in a predetermined configuration (e.g., in predetermined locations relative to each other).

In some examples, the alignment fiducial constrains the relative movement of the aforementioned components in two dimensions (e.g., laterally relative to the AR glasses) and three dimensions (e.g., laterally and fore/aft relative to the AR glasses).

In some examples, the display projector assembly is configured to interface with the waveguide so that the waveguide and the display projector assembly are aligned. The alignment fiducial can be configured to register/index with the display projector assembly to correctly clock the display projector assembly in addition to the relative positions of the optical stack and the display projector assembly.

In some examples, the frame of the AR glasses interfaces with the alignment fiducial of the waveguide of the optical stack so that the optical stack and the display projector assembly are aligned within the frame. In some examples, for binocular AR glasses, the alignment fiducial ensures alignment between a first display assembly (that includes a first optical stack and a first display projector assembly) and a second display assembly (that includes a second optical stack and a second display projector assembly) when both display assemblies are inserted/assembled into the frame of the AR glasses. This can reduce or eliminate the disparity between the display assemblies, thereby improving the user experience.

(D2) In some examples of D1, inserting the optical stack into the frame of the augmented-reality glasses maintains alignment of the optical stack via the alignment fiducial such that the first lens, the second lens, and the waveguide remain aligned. In some examples, the alignment fiducial maintains alignment of the optical stack during assembly. For example, the alignment fiducial maintains alignment of the first lens, the second lens, and the waveguide when the optical stack is inserted into the frame.

(D3) In some examples of any of D1-D2, inserting the optical stack into the frame of the augmented-reality glasses further maintains alignment of the optical stack and the display projector assembly.

In some examples, the alignment fiducial aligns the display projector assembly to the optical stack when the display projector assembly is inserted into the frame. For example, the display projector assembly is coupled to the optical stack outside the frame and is aligned via the alignment fiducial. In this example, the alignment fiducial maintains the alignment as the display projector assembly and optical stack combination is inserted and/or installed into the frame of the AR glasses.

(D4) In some examples of any of D1-D3, the alignment fiducial is configured to maintain alignment of the optical stack, display projector assembly, and frame during a drop event impacting the pair of augmented-reality glasses.

In some examples, the alignment fiducial is configured to maintain alignment of the optical stack, display projector assembly, and the frame of the AR glasses before, during, and after a drop event impacting the AR glasses. For example, during a drop event, the alignment fiducial maintains the relative positions of the optical stack, display projector assembly, and the frame. In another example, a high-force drop event can cause misalignment of the optical stack, display projector assembly, and the frame during the high-force drop event. In this example, after the high-force drop event (e.g., when there is no additional external force applied to the AR glasses), the alignment fiducial realigns the optical stack, display projector assembly, and the frame. In some examples, the alignment fiducial enables a user or technician to realign the components of the AR glasses if the alignment fiducial does not automatically realign the components after a drop event.

In some examples, the alignment of the first lens, second lens, and waveguide by the alignment fiducial and the alignment of the optical stack with the display projector assembly is stronger than the alignment of these components with the frame. For example, during an extreme-force drop event, the optical stack and the display projector assembly will remain aligned so that an image can be projected from the display projector assembly and displayed at the optical stack without distortion or artifacts. In this example, the optical stack and the frame can become misaligned, and such misalignment can be more tolerable to the user. For example, in a monocular display context, the misalignment of the image impacts the user experience less than distortion or artifacts in the image displayed at the waveguide. In another example, the portion of the frame that interfaces with the alignment fiducial can be configured to yield to reduce or prevent damage to the optical stack and/or the display projector assembly.

(D5) In some examples of any of D1-D4, the alignment fiducial is a first alignment fiducial, and the waveguide includes a second alignment fiducial for alignment of the first lens, the second lens, the display projector assembly, and/or the frame.

In some examples, the second alignment fiducial further constrains the relative movements of the first lens, the second lens, and the display projector assembly. In some examples, the two alignment fiducials improve the alignment of the first lens, the second lens, the waveguide, the display projector assembly, and the frame. For example, the second alignment fiducial increases the amount of force that can be applied to the components without becoming misaligned.

In some examples, the second alignment fiducial is the same shape as the first alignment fiducial. In some examples, the second alignment fiducial is a different shape than the shape of the first alignment fiducial.

(D6) In some examples of any of D1-D5, the first alignment fiducial and the second alignment fiducial constrain the relative three-dimensional orientations of the optical stack, the display projector assembly, and the frame. In some examples, the first alignment fiducial and the second alignment fiducial constrain the relative movement of the first lens, the second lens, the waveguide, the display projector assembly, and the frame in three dimensions.

(D7) In some examples of any of D1-D6, the waveguide is recessed within the first lens and/or recessed within the second lens.

In some examples, recessing the waveguide within a first lens and/or a second lens reduces the stress received by the waveguide, thereby improving the drop tolerance of the waveguide and the optical stack generally. For example, recessing the waveguide within the first lens and/or the second lens reduces the likelihood that the waveguide will crack, or otherwise be damaged, if the augmented-reality glasses are dropped.

(D8) In some examples of any of D1-D7, the alignment fiducial is a specified shape that indexes with a corresponding first shape of the first lens and a corresponding second shape of the second lens.

In some examples, the shape of the alignment fiducial is elliptical and/or tapered so that any misalignment between the components of the AR glasses is self-correcting. For example, during assembly or during a drop event, if the components aligned via the alignment fiducial become misaligned, the elliptical and/or tapered shape cause the components to become realigned.

(E1) In some examples, a display assembly for a pair of augmented-reality glasses includes an optical stack and a display projector assembly. The optical stack includes a waveguide having an alignment fiducial, a first lens, and a second lens. The first lens is aligned with the waveguide via the alignment fiducial, and the second lens is aligned with the waveguide via the alignment fiducial. The display projector assembly is configured to be coupled to the optical stack via the alignment fiducial. Moreover, the optical stack and the display projector assembly are configured to present an augmented-reality experience via the pair of augmented-reality glasses.

(E2) In some examples of E1, the display assembly is configured corresponding to any one of D1-D8.

(F1) In some examples, an optical stack includes a waveguide, a first lens, and a second lens. The waveguide includes an alignment fiducial. The first lens is aligned with the waveguide via the alignment field, and the second lens is aligned with the waveguide via the alignment field. Moreover, the optical stack is configured to receive an image from a display projector assembly to present an augmented-reality experience via a pair of augmented-reality glasses.

(F2) In some examples of F1, the optical stack is configured corresponding to any one of claims D1-D8.

The devices described above are further detailed below, including wrist-wearable devices, headset devices, systems, and haptic feedback devices. Specific operations described above may occur as a result of specific hardware, and such hardware is described in further detail below. The devices described below are not limiting and features on these devices can be removed or additional features can be added to these devices.

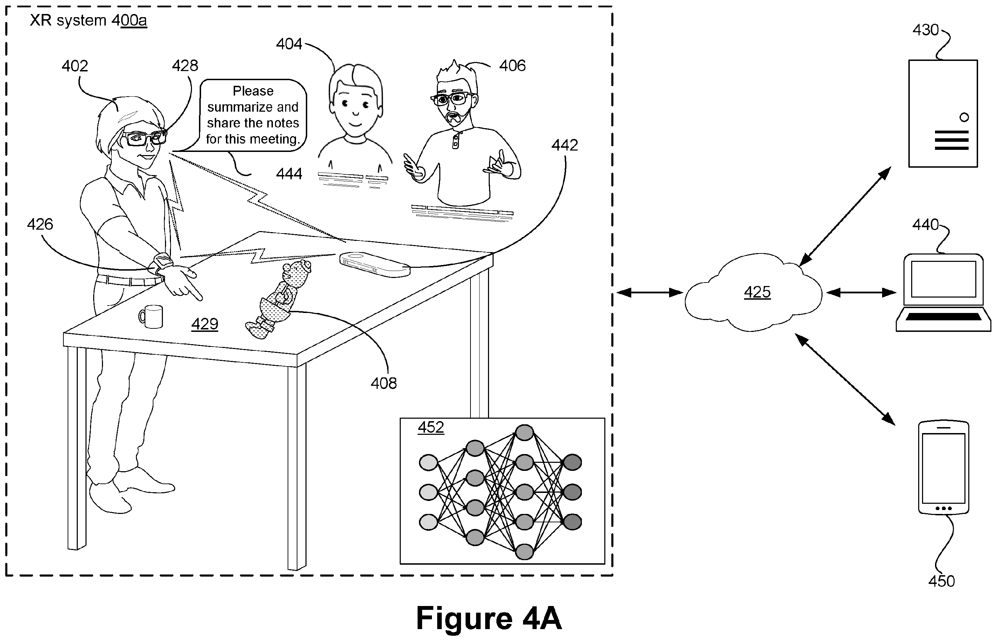

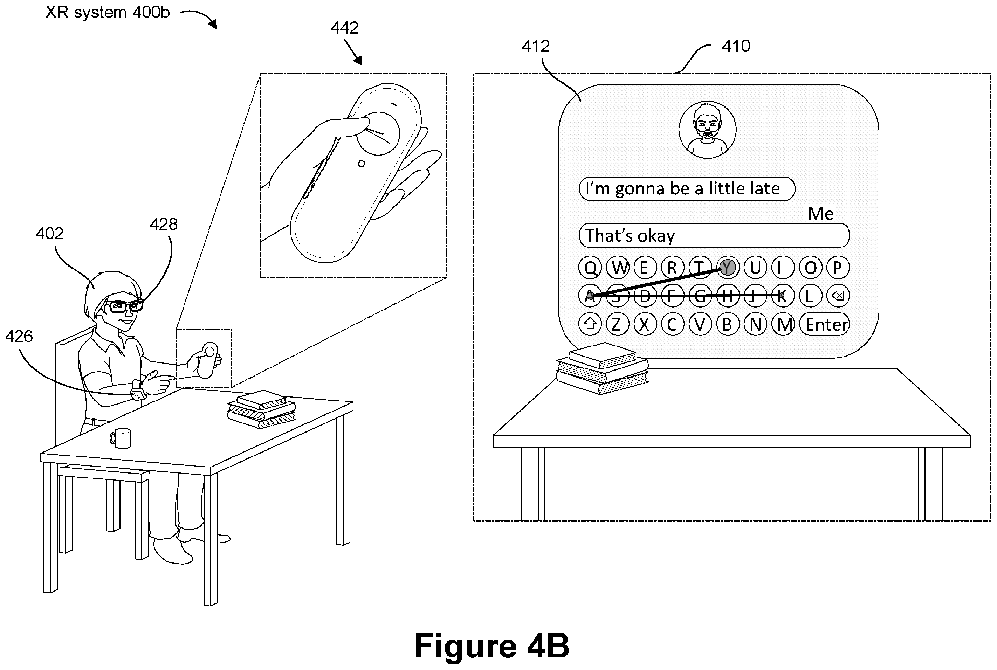

Figures 4A, 4B, 4C-1, and 4C-2 illustrate example XR systems that include AR and MR systems. Figure 4A shows a first XR system 400a and first example user interactions using a wrist-wearable device 426, a head-wearable device (e.g., AR device 428), and/or an HIPD 442. Figure 4B shows a second XR system 400b and second example user interactions using a wrist-wearable device 426, AR device 428, and/or an HIPD 442. Figures 4C-1 and 4C-2 show a third MR system 400c and third example user interactions using a wrist-wearable device 426, a head-wearable device (e.g., an MR device such as a VR device), and/or an HIPD 442. As the skilled artisan will appreciate upon reading the descriptions provided herein, the above-example AR and MR systems (described in detail below) can perform various functions and/or operations.

The wrist-wearable device 426, the head-wearable devices, and/or the HIPD 442 can communicatively couple via a network 425 (e.g., cellular, near-field, Wi-Fi, personal area network, wireless LAN). Additionally, the wrist-wearable device 426, the head-wearable device, and/or the HIPD 442 can also communicatively couple with one or more servers 430, computers 440 (e.g., laptops, computers), mobile devices 450 (e.g., smartphones, tablets), and/or other electronic devices via the network 425 (e.g., cellular, near-field, Wi-Fi, personal area network, wireless LAN). Similarly, a smart textile-based garment, when used, can also communicatively couple with the wrist-wearable device 426, the head-wearable device(s), the HIPD 442, the one or more servers 430, the computers 440, the mobile devices 450, and/or other electronic devices via the network 425 to provide inputs.

Turning to Figure 4A, a user 402 is shown wearing the wrist-wearable device 426 and the AR device 428 and having the HIPD 442 on their desk. The wrist-wearable device 426, the AR device 428, and the HIPD 442 facilitate user interaction with an AR environment. In particular, as shown by the first AR system 400a, the wrist-wearable device 426, the AR device 428, and/or the HIPD 442 cause presentation of one or more avatars 404, digital representations of contacts 406, and virtual objects 408. As discussed below, the user 402 can interact with the one or more avatars 404, digital representations of the contacts 406, and virtual objects 408 via the wrist-wearable device 426, the AR device 428, and/or the HIPD 442. In addition, the user 402 is also able to directly view physical objects in the environment, such as a physical table 429, through transparent lens(es) and waveguide(s) of the AR device 428. Alternatively, an MR device could be used in place of the AR device 428 and a similar user experience can take place, but the user would not be directly viewing physical objects in the environment, such as table 429, and would instead be presented with a virtual reconstruction of the table 429 produced from one or more sensors of the MR device (e.g., an outward-facing camera capable of recording the surrounding environment).

The user 402 can use any of the wrist-wearable device 426, the AR device 428 (e.g., through physical inputs at the AR device and/or built-in motion tracking of a user's extremities), a smart-textile garment, externally mounted extremity tracking device, and the HIPD 442 to provide user inputs, etc. For example, the user 402 can perform one or more hand gestures that are detected by the wrist-wearable device 426 (e.g., using one or more EMG sensors and/or IMUs built into the wrist-wearable device 426) and/or AR device 428 (e.g., using one or more image sensors or cameras) to provide a user input. Alternatively, or additionally, the user 402 can provide a user input via one or more touch surfaces of the wrist-wearable device 426, the AR device 428, and/or the HIPD 442, and/or voice commands captured by a microphone of the wrist-wearable device 426, the AR device 428, and/or the HIPD 442. The wrist-wearable device 426, the AR device 428, and/or the HIPD 442 include an artificially intelligent digital assistant to help the user in providing a user input (e.g., completing a sequence of operations, suggesting different operations or commands, providing reminders, confirming a command). For example, the digital assistant can be invoked through an input occurring at the AR device 428 (e.g., via an input at a temple arm of the AR device 428). In some examples, the user 402 can provide a user input via one or more facial gestures and/or facial expressions. For example, cameras of the wrist-wearable device 426, the AR device 428, and/or the HIPD 442 can track the user 402's eyes for navigating a user interface.

The wrist-wearable device 426, the AR device 428, and/or the HIPD 442 can operate alone or in conjunction to allow the user 402 to interact with the AR environment. In some examples, the HIPD 442 is configured to operate as a central hub or control center for the wrist-wearable device 426, the AR device 428, and/or another communicatively coupled device. For example, the user 402 can provide an input to interact with the AR environment at any of the wrist-wearable device 426, the AR device 428, and/or the HIPD 442, and the HIPD 442 can identify one or more back-end and front-end tasks to cause the performance of the requested interaction and distribute instructions to cause the performance of the one or more back-end and front-end tasks at the wrist-wearable device 426, the AR device 428, and/or the HIPD 442. In some examples, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 442 can perform the back-end tasks and provide the wrist-wearable device 426 and/or the AR device 428 operational data corresponding to the performed back-end tasks such that the wrist-wearable device 426 and/or the AR device 428 can perform the front-end tasks. In this way, the HIPD 442, which has more computational resources and greater thermal headroom than the wrist-wearable device 426 and/or the AR device 428, performs computationally intensive tasks and reduces the computer resource utilization and/or power usage of the wrist-wearable device 426 and/or the AR device 428.

In the example shown by the first AR system 400a, the HIPD 442 identifies one or more back-end tasks and front-end tasks associated with a user request to initiate an AR video call with one or more other users (represented by the avatar 404 and the digital representation of the contact 406) and distributes instructions to cause the performance of the one or more back-end tasks and front-end tasks. In particular, the HIPD 442 performs back-end tasks for processing and/or rendering image data (and other data) associated with the AR video call and provides operational data associated with the performed back-end tasks to the AR device 428 such that the AR device 428 performs front-end tasks for presenting the AR video call (e.g., presenting the avatar 404 and the digital representation of the contact 406).

In some examples, the HIPD 442 can operate as a focal or anchor point for causing the presentation of information. This allows the user 402 to be generally aware of where information is presented. For example, as shown in the first AR system 400a, the avatar 404 and the digital representation of the contact 406 are presented above the HIPD 442. In particular, the HIPD 442 and the AR device 428 operate in conjunction to determine a location for presenting the avatar 404 and the digital representation of the contact 406. In some examples, information can be presented within a predetermined distance from the HIPD 442 (e.g., within five meters). For example, as shown in the first AR system 400a, virtual object 408 is presented on the desk some distance from the HIPD 442. Similar to the above example, the HIPD 442 and the AR device 428 can operate in conjunction to determine a location for presenting the virtual object 408. Alternatively, In some examples, presentation of information is not bound by the HIPD 442. More specifically, the avatar 404, the digital representation of the contact 406, and the virtual object 408 do not have to be presented within a predetermined distance of the HIPD 442. While an AR device 428 is described working with an HIPD, an MR headset can be interacted with in the same way as the AR device 428.

User inputs provided at the wrist-wearable device 426, the AR device 428, and/or the HIPD 442 are coordinated such that the user can use any device to initiate, continue, and/or complete an operation. For example, the user 402 can provide a user input to the AR device 428 to cause the AR device 428 to present the virtual object 408 and, while the virtual object 408 is presented by the AR device 428, the user 402 can provide one or more hand gestures via the wrist-wearable device 426 to interact and/or manipulate the virtual object 408. While an AR device 428 is described working with a wrist-wearable device 426, an MR headset can be interacted with in the same way as the AR device 428.

Figure 4A illustrates an interaction in which an artificially intelligent virtual assistant can assist in requests made by a user 402. The AI virtual assistant can be used to complete open-ended requests made through natural language inputs by a user 402. For example, in Figure 4A, the user 402 makes an audible request 444 to summarize the conversation and then share the summarized conversation with others in the meeting. In addition, the AI virtual assistant is configured to use sensors of the XR system (e.g., cameras of an XR headset, microphones, and various other sensors of any of the devices in the system) to provide contextual prompts to the user 402 for initiating tasks.

Figure 4A also illustrates an example neural network 452 used in artificial intelligence applications. Uses of artificial intelligence (AI) are varied and encompass many different aspects of the devices and systems described herein. AI capabilities cover a diverse range of applications and deepen interactions between the user 402 and user devices (e.g., the AR device 428, an MR device 432, the HIPD 442, the wrist-wearable device 426). The AI discussed herein can be derived using many different training techniques. While the primary AI model example discussed herein is a neural network, other AI models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The AI models can be implemented at one or more of the user devices and/or any other devices described herein. For devices and systems herein that employ multiple AI models, different models can be used depending on the task. For example, for a natural-language artificially intelligent virtual assistant, an LLM can be used, and for the object detection of a physical environment, a DNN can be used instead.

In another example, an AI virtual assistant can include many different AI models and, based on the user's request, multiple AI models may be employed (concurrently, sequentially or a combination thereof). For example, an LLM-based AI model can provide instructions for helping a user follow a recipe and the instructions can be based in part on another AI model that is derived from an ANN, a DNN, an RNN, etc. that is capable of discerning what part of the recipe the user is on (e.g., object and scene detection).

As AI training models evolve, the operations and experiences described herein could potentially be performed with different models other than those listed above, and a person skilled in the art would understand that the list above is non-limiting.

A user 402 can interact with an AI model through natural language inputs captured by a voice sensor, text inputs, or any other input modality that accepts natural language and/or a corresponding voice sensor module. In another instance, input is provided by tracking the eye gaze of a user 402 via a gaze tracker module. Additionally, the AI model can also receive inputs beyond those supplied by a user 402. For example, the AI can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user's request by various types of sensors and/or their corresponding sensor modules. The sensors' data can be retrieved entirely from a single device (e.g., AR device 428) or from multiple devices that are in communication with each other (e.g., a system that includes at least two of an AR device 428, an MR device 432, the HIPD 442, the wrist-wearable device 426, etc.). The AI model can also access additional information (e.g., one or more servers 430, the computers 440, the mobile devices 450, and/or other electronic devices) via a network 425.

A non-limiting list of Al-enhanced functions includes, but is not limited to, image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some examples, AI-enhanced functions are fully or partially executed on cloud computing platforms communicatively coupled to the user devices (e.g., the AR device 428, an MR device 432, the HIPD 442, the wrist-wearable device 426) via the one or more networks 425. The cloud computing platforms provide scalable computing resources, distributed computing, managed AI services, interference acceleration, pre-trained models, APIs and/or other resources to support comprehensive computations required by the Al-enhanced function.

Example outputs stemming from the use of an AI model can include natural language responses, mathematical calculations, charts displaying information, audio, images, videos, texts, summaries of meetings, predictive operations based on environmental factors, classifications, pattern recognitions, recommendations, assessments, or other operations. In some examples, the generated outputs are stored on local memories of the user devices (e.g., the AR device 428, an MR device 432, the HIPD 442, the wrist-wearable device 426), storage options of the external devices (servers, computers, mobile devices, etc.), and/or storage options of the cloud computing platforms.

The Al-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 442), haptic feedback can provide information to the user 402. An AI model can also use the inputs described above to determine the appropriate modality and device(s) to present content to the user (e.g., a user walking on a busy road can be presented with an audio output instead of a visual output to avoid distracting the user 402).

Figure 4B shows the user 402 wearing the wrist-wearable device 426 and the AR device 428 and holding the HIPD 442. In the second AR system 400b, the wrist-wearable device 426, the AR device 428, and/or the HIPD 442 are used to receive and/or provide one or more messages to a contact of the user 402. In particular, the wrist-wearable device 426, the AR device 428, and/or the HIPD 442 detect and coordinate one or more user inputs to initiate a messaging application and prepare a response to a received message via the messaging application.

In some examples, the user 402 initiates, via a user input, an application on the wrist-wearable device 426, the AR device 428, and/or the HIPD 442 that causes the application to initiate on at least one device. For example, in the second AR system 400b the user 402 performs a hand gesture associated with a command for initiating a messaging application (represented by messaging user interface 412); the wrist-wearable device 426 detects the hand gesture; and, based on a determination that the user 402 is wearing the AR device 428, causes the AR device 428 to present a messaging user interface 412 of the messaging application. The AR device 428 can present the messaging user interface 412 to the user 402 via its display (e.g., as shown by user 402's field of view 410). In some examples, the application is initiated and can be run on the device (e.g., the wrist-wearable device 426, the AR device 428, and/or the HIPD 442) that detects the user input to initiate the application, and the device provides another device operational data to cause the presentation of the messaging application. For example, the wrist-wearable device 426 can detect the user input to initiate a messaging application, initiate and run the messaging application, and provide operational data to the AR device 428 and/or the HIPD 442 to cause presentation of the messaging application. Alternatively, the application can be initiated and run at a device other than the device that detected the user input. For example, the wrist-wearable device 426 can detect the hand gesture associated with initiating the messaging application and cause the HIPD 442 to run the messaging application and coordinate the presentation of the messaging application.

Further, the user 402 can provide a user input provided at the wrist-wearable device 426, the AR device 428, and/or the HIPD 442 to continue and/or complete an operation initiated at another device. For example, after initiating the messaging application via the wrist-wearable device 426 and while the AR device 428 presents the messaging user interface 412, the user 402 can provide an input at the HIPD 442 to prepare a response (e.g., shown by the swipe gesture performed on the HIPD 442). The user 402's gestures performed on the HIPD 442 can be provided and/or displayed on another device. For example, the user 402's swipe gestures performed on the HIPD 442 are displayed on a virtual keyboard of the messaging user interface 412 displayed by the AR device 428.

In some examples, the wrist-wearable device 426, the AR device 428, the HIPD 442, and/or other communicatively coupled devices can present one or more notifications to the user 402. The notification can be an indication of a new message, an incoming call, an application update, a status update, etc. The user 402 can select the notification via the wrist-wearable device 426, the AR device 428, or the HIPD 442 and cause presentation of an application or operation associated with the notification on at least one device. For example, the user 402 can receive a notification that a message was received at the wrist-wearable device 426, the AR device 428, the HIPD 442, and/or any other communicatively coupled device and provide a user input at the wrist-wearable device 426, the AR device 428, and/or the HIPD 442 to review the notification, and the device detecting the user input can cause an application associated with the notification to be initiated and/or presented at the wrist-wearable device 426, the AR device 428, and/or the HIPD 442.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 428 can present to the user 402 game application data and the HIPD 442 can use a controller to provide inputs to the game. Similarly, the user 402 can use the wrist-wearable device 426 to initiate a camera of the AR device 428, and the user 402 can use the wrist-wearable device 426, the AR device 428, and/or the HIPD 442 to manipulate the image capture (e.g., zoom in or out, apply filters) and capture image data.

While an AR device 428 is shown as being capable of certain functions, it is understood that an AR device can be an AR device with varying functionalities based on costs and market demands. For example, an AR device may include a single output modality, such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light-emitting diodes (LEDs) configured to provide a user with information (e.g., an LED around the right-side lens can illuminate to notify the wearer to turn right while directions are being provided or an LED on the left-side can illuminate to notify the wearer to turn left while directions are being provided). In another example, the AR device can include an outward-facing projector such that information (e.g., text information, media) may be displayed on the palm of a user's hand or other suitable surface (e.g., a table, whiteboard). In yet another example, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed to presenting an AR augmented at both lenses to produce a binocular image). In some instances, an AR device capable of presenting AR augments binocularly can optionally display AR augments monocularly as well (e.g., for power-saving purposes or other presentation considerations). These examples are non-exhaustive, and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

Turning to Figures 4C-1 and 4C-2, the user 402 is shown wearing the wrist-wearable device 426 and an MR device 432 (e.g., a device capable of providing either an entirely VR experience or an MR experience that displays object(s) from a physical environment at a display of the device) and holding the HIPD 442. In the third AR system 400c, the wrist-wearable device 426, the MR device 432, and/or the HIPD 442 are used to interact within an MR environment, such as a VR game or other MR/VR application. While the MR device 432 presents a representation of a VR game (e.g., first MR game environment 420) to the user 402, the wrist-wearable device 426, the MR device 432, and/or the HIPD 442 detect and coordinate one or more user inputs to allow the user 402 to interact with the VR game.

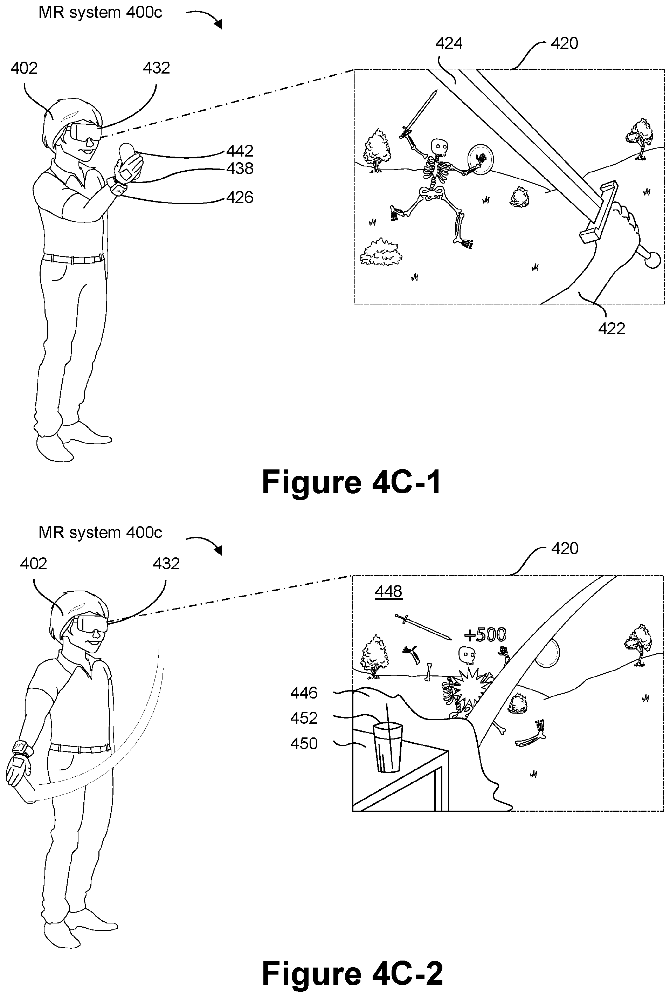

In some examples, the user 402 can provide a user input via the wrist-wearable device 426, the MR device 432, and/or the HIPD 442 that causes an action in a corresponding MR environment. For example, the user 402 in the third MR system 400c (shown in Figure 4C-1) raises the HIPD 442 to prepare for a swing in the first MR game environment 420. The MR device 432, responsive to the user 402 raising the HIPD 442, causes the MR representation of the user 422 to perform a similar action (e.g., raise a virtual object, such as a virtual sword 424). In some examples, each device uses respective sensor data and/or image data to detect the user input and provide an accurate representation of the user 402's motion. For example, image sensors (e.g., SLAM cameras or other cameras) of the HIPD 442 can be used to detect a position of the HIPD 442 relative to the user 402's body such that the virtual object can be positioned appropriately within the first MR game environment 420; sensor data from the wrist-wearable device 426 can be used to detect a velocity at which the user 402 raises the HIPD 442 such that the MR representation of the user 422 and the virtual sword 424 are synchronized with the user 402's movements; and image sensors of the MR device 432 can be used to represent the user 402's body, boundary conditions, or real-world objects within the first MR game environment 420.

In Figure 4C-2, the user 402 performs a downward swing while holding the HIPD 442. The user 402's downward swing is detected by the wrist-wearable device 426, the MR device 432, and/or the HIPD 442 and a corresponding action is performed in the first MR game environment 420. In some examples, the data captured by each device is used to improve the user's experience within the MR environment. For example, sensor data of the wrist-wearable device 426 can be used to determine a speed and/or force at which the downward swing is performed and image sensors of the HIPD 442 and/or the MR device 432 can be used to determine a location of the swing and how it should be represented in the first MR game environment 420, which, in turn, can be used as inputs for the MR environment (e.g., game mechanics, which can use detected speed, force, locations, and/or aspects of the user 402's actions to classify a user's inputs (e.g., user performs a light strike, hard strike, critical strike, glancing strike, miss) or calculate an output (e.g., amount of damage)).

Figure 4C-2 further illustrates that a portion of the physical environment is reconstructed and displayed at a display of the MR device 432 while the MR game environment 420 is being displayed. In this instance, a reconstruction of the physical environment 446 is displayed in place of a portion of the MR game environment 420 when object(s) in the physical environment are potentially in the path of the user (e.g., a collision with the user and an object in the physical environment are likely). Thus, this example MR game environment 420 includes (i) an immersive VR portion 448 (e.g., an environment that does not have a corollary counterpart in a nearby physical environment); and (ii) a reconstruction of the physical environment 446 (e.g., table 450 and cup 452). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 426, the MR device 432, and/or the HIPD 442 are described as detecting user inputs, In some examples, user inputs are detected at a single device (with the single device being responsible for distributing signals to the other devices for performing the user input). For example, the HIPD 442 can operate an application for generating the first MR game environment 420 and provide the MR device 432 with corresponding data for causing the presentation of the first MR game environment 420, as well as detect the user 402's movements (while holding the HIPD 442) to cause the performance of corresponding actions within the first MR game environment 420. Additionally or alternatively, In some examples, operational data (e.g., sensor data, image data, application data, device data, and/or other data) of one or more devices is provided to a single device (e.g., the HIPD 442) to process the operational data and cause respective devices to perform an action associated with processed operational data.

In some examples, the user 402 can wear a wrist-wearable device 426, wear an MR device 432, wear smart textile-based garments 438 (e.g., wearable haptic gloves), and/or hold an HIPD 442 device. In this example, the wrist-wearable device 426, the MR device 432, and/or the smart textile-based garments 438 are used to interact within an MR environment (e.g., any AR or MR system described above in reference to Figures 4A-4B). While the MR device 432 presents a representation of an MR game (e.g., second MR game environment 420) to the user 402, the wrist-wearable device 426, the MR device 432, and/or the smart textile-based garments 438 detect and coordinate one or more user inputs to allow the user 402 to interact with the MR environment.

In some examples, the user 402 can provide a user input via the wrist-wearable device 426, an HIPD 442, the MR device 432, and/or the smart textile-based garments 438 that causes an action in a corresponding MR environment. In some examples, each device uses respective sensor data and/or image data to detect the user input and provide an accurate representation of the user 402's motion. While four different input devices are shown (e.g., a wrist-wearable device 426, an MR device 432, an HIPD 442, and smart textile-based garments 438), each one of these input devices can provide inputs for fully interacting with the MR environment entirely on its own. For example, the wrist-wearable device 426 can provide sufficient inputs on its own for interacting with the MR environment. In some examples, if multiple input devices are used (e.g., a wrist-wearable device 426 and the smart textile-based garments 438), sensor fusion can be utilized to ensure inputs are correct. While multiple input devices are described, it is understood that other input devices can be used in conjunction or on their own instead, such as, but not limited to, external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 438 can be used in conjunction with an MR device 432 and/or an HIPD 442.

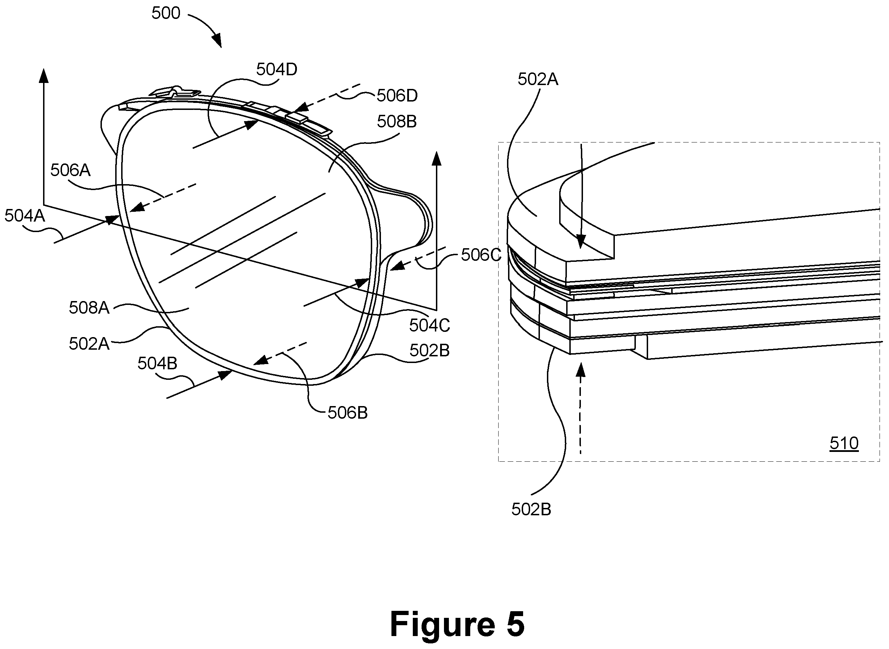

The discussions herein related to Figures 5-9 are meant to augment the features described in reference to the preceding figures. One skilled in the art would understand the components described in reference to all the figures can be interchanged based on the requirements of each device.

Figure 5 illustrates an optical stack 500 that is configured to distribute forces away from sensitive components of the optical stack. Figure 5 shows a first side perimeter region 502A and a second side perimeter region 502B that are configured to receive force on the optical stack 500, as illustrated by arrows 504A-504D on the first side and 506A-506D on the second side. In some examples, the first side perimeter region 502A and the second side perimeter region 502B allow for the load to be evenly distributed (i.e., uniformly) across the perimeter surface and thereby reduce any specific area from having a higher load. By evenly distributing the load, the possibility for damage (e.g., cracking lenses/waveguides or causing misalignment) of the optical stack 500 during a drop event is lessened. In some instances, these load bearing perimeter regions (e.g., 502A and 502B) are also referred to as a carrier. Figure 5 shows that the optical stack is configured to be hard mounted into a glasses frame, which means that the first side perimeter region 502A and the second side perimeter region 502B do not include an intermediary component (e.g., a gasket or other damping mechanisms). Optional intermediary components are described, however, in reference to subsequent Figures (e.g., foam or PSA). While load paths are discussed in reference to Figure 5, subsequent figures and their associated descriptions do describe the addition of dampers and other force mitigation techniques.

In some examples, one or more of the first side perimeter region 502A and the second side perimeter region 502B are integrally formed with the outer lens frames 508A and 508B, respectively. In some examples, the first side perimeter region 502A and the second side perimeter region 502B are not integrally formed with the outer lens frames 508A and 508B.

Figure 5 also shows a cutaway view 510, which illustrates how the sensitive components (e.g., waveguide, active dimming, etc.) are less likely to receive force by placing them inset from the first side perimeter region 502A and the second side perimeter region 502B.

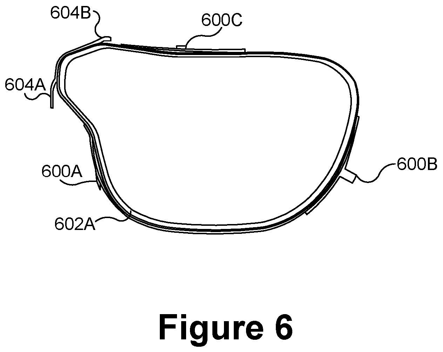

Figure 6 illustrates an example in which flexures and bumpers are placed around portions of the load bearing perimeter regions (e.g., the first side perimeter region 502A and the second side perimeter region 502B described in reference to Figure 5). Figure 6 shows a plurality of flexures 600A-600C surrounding the perimeter regions 602A and 602B (occluded) (e.g., the first side perimeter region 502A and the second side perimeter region 502B described in reference to Figure 5). These flexures 600A-600C are a quasi-kinematic mounting system that are configured to slot into corresponding locations on a frame of a pair of smart glasses. In some examples, the optical stack 600 also include a plurality of bumpers 604A and 604B that are also configured to restrict waveguide travel and dampen impact forces. One skilled in the art would appreciate that multiple mitigation techniques to protect the sensitive components of the optical stack can be implemented to ensure minimal damage in a drop event. For example, more or less bumpers and flexures can be used based on the design considerations and weight requirements of the pair of smart glasses.

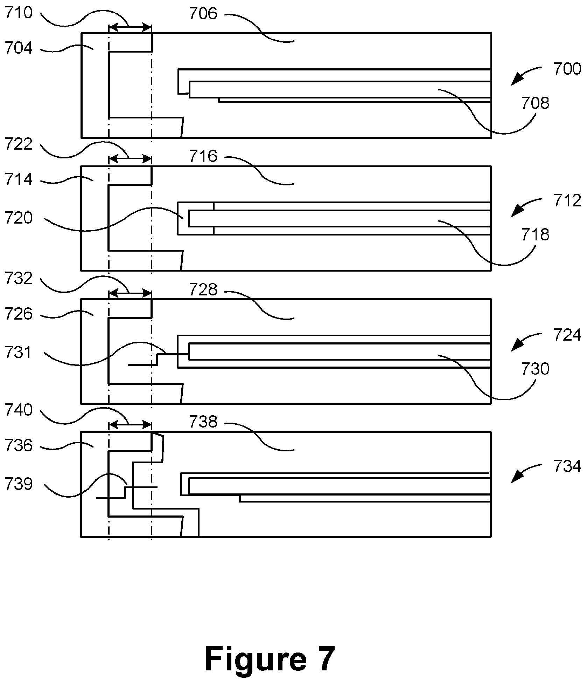

Figure 7 illustrates different mounting techniques for securing the sensitive components of the optical stack, such that they are minimal impacted by external forces. Figure 7 shows four variations in which different approaches are used to protective the sensitive components of the optical stack. The first example cutaway 702 shows a frame portion 704 coupled to an optical stack 706. In this first example cutaway 702 the sensitive optical components 708 that is encapsulated in the optical stack 706 is inset and placed out of the load path, which is indicated by a dashed lines 710 that indicates the load path. In this first example cutaway 702 the sensitive optical components 708 are in contact with optical stack 706.

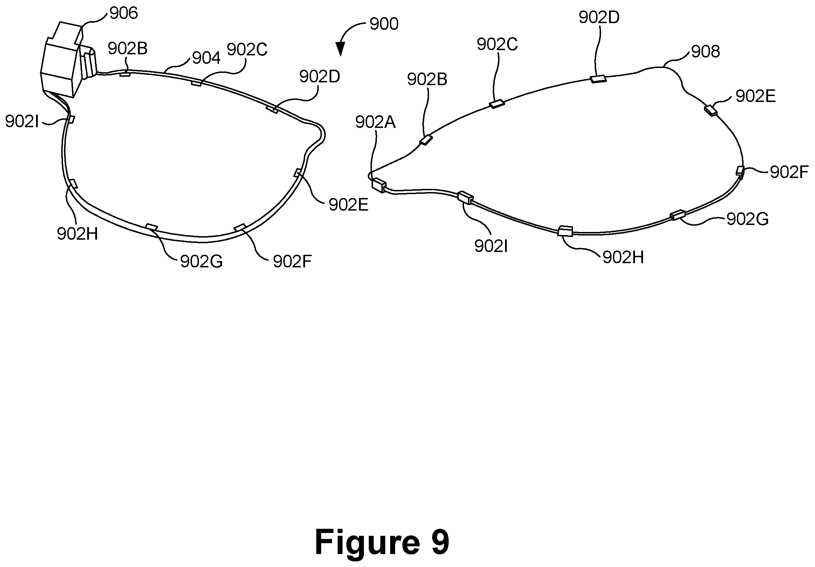

The second example cutaway 712 shows a frame portion 714 coupled to an optical stack 716. In this second example cutaway 712 the sensitive optical components 718 that is encapsulated in the optical stack 716 is internally suspended on elastomeric isolator 720 (placement of additional isolators are shown with respect to Figure 9) and is thus further placed out of the load path, which is indicated by a dashed lines 722 that indicates the load path.

The third example cutaway 724 shows a frame portion 726 coupled to an optical stack 728. In this third example cutaway 724 the sensitive optical components 730 that is encapsulated in the optical stack 728 is internally suspended on a flexure 731 (different from the flexures described in reference of Figure 6) and is thus placed out of the load path, which is indicated by a dashed lines 732 that indicates the load path.

The fourth example cutaway 734 shows a frame portion 736 coupled to an optical stack 738. In this fourth example cutaway 734 the optical stack 738 is suspended on a flexure 739 and is thus placed out of the load path, which is indicated by a dashed lines 740 that indicates the load path. A person skilled in the art would understand that the different isolation techniques described in this figure and in the preceding figure are combinable, and one skilled in the art would select the correct techniques based on design considerations and how sensitive the sensitive components are to impacts.

Additional views and variations of mounting techniques for securing the sensitive components of the optical stack are also shown in Figure 9. The features described in reference to Figure 9 can be incorporated in the examples shown in relation to Figure 7.

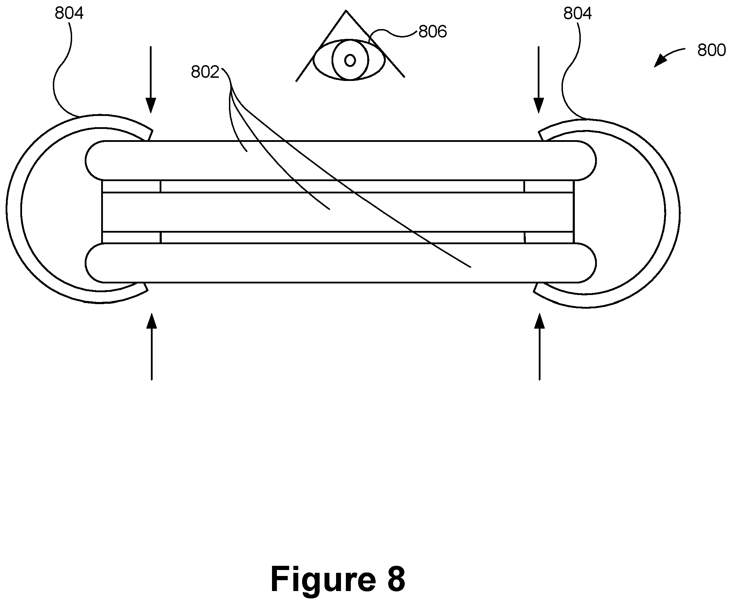

Figure 8 illustrates another example in which a shock absorbing material is placed around the optical stack to reduce forces transmitted to the optical stack. Figure 8 shows a cutaway view 800 that includes an optical stack 802 that has a circumferential shock absorbing springs 804 placed around it. Figure 8 also shows an illustrative eye 806 indicating the orientation of the shock absorbing spring 804 relative to the optical stack. By placing Young's modulus and preload force tunable shock absorbing springs 804 normal to the polished surface of the eyepiece, and perpendicular to the long axis of the eyepiece many improvements are shown. For example, shock is absorbed significantly and the shock is prevented from reaching the weakest regions of the eyepiece (edges). In some examples, the addition of the shock absorbing spring 804 adds no additional size and weight as it can be incorporated into the frame, which is a key eyepiece component. The frame is configured prevent abrupt point load impacts to the eyepiece edges.

In addition, compressive stresses in this plane and location do not distort the optical field as they are out of plane and sufficiently spaced from waveguide image transmission regions. The brittle eyepiece material is strong enough to support these compressive forces over a large operating range. The eyepiece material can be comprised of many different material, and in some examples the eyepiece material can have ceramic properties, These compressive forces also result in greater overall eyepiece integrity through increasing friction between eyepiece elements and may result in the ability to remove or reduce adhesive layers and other ancillary materials/weight from the assembly.

In some examples, the shock absorbing springs 804 can comprise a compliant gasket material on each side of the eyepiece (user facing and world facing). In some examples, the frame material is configured to provide uniform pressure and compression around the gasket through a tunable mechanism such as a screw. In some examples, the frame material is heated and then placed around the gasket and then cooled, which results in thermal compression. In some examples, the frame material is mechanically expanded, placed around gasket, and released, which is configured to provide compression through stored mechanical energy.

Figure 9 illustrates an additional technique in which the waveguide 900 is further isolated from impacts via a series of isolators 902A-902I. These isolators 902A-902I can be elastomeric in composition or can be constructed using any other impact mitigation material/technique described in reference to Figures 1-8. Figure 9 shows a first side 904 of the waveguide 900, which shows a display projector assembly (DPA) 906 being attached to the waveguide 900. Also shown is a second side 908 of the waveguide 900, which illustrates that the isolators 902A-902I wrap around the waveguide providing isolation on both sides.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices and less suitable for a different set of devices. But subsequent reference to the components defined here should be considered to be encompassed by the definitions provided.

In some examples, example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components, such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

The foregoing descriptions of Figures 4A-4C-2 provided above are intended to augment the description provided in reference to Figures 1A, 1B, 2-3 and 5-9. While terms in the following description may not be identical to terms used in the foregoing description, a person having ordinary skill in the art would understand these terms to have the same meaning.

Any data collection performed by the devices described herein and/or any devices configured to perform or cause the performance of the different examples described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in to or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular examples only and is not intended to be limiting of the claims. As used in the description of the examples and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining that" or "in accordance with a determination that" or "in response to detecting that" a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific examples. However, the illustrative discussions above are not intended to be exhaustive nor to limit the claims to the precise forms disclosed. Many modifications and variations are possible in view of the above teachings. The examples were chosen and described in order to best explain principles of operation and practical applications to thereby enable others skilled in the art.

## Claims

1. A display assembly for a pair of augmented-reality glasses, comprising:
an optical stack including one or more lenses and a first interface material at a perimeter of the optical stack, wherein the first interface material separates the optical stack from directly contacting a frame of the pair of augmented-reality glasses;
a display projector assembly, a portion of which is suspended within a second interface material that is less stiff than the first interface material; and
the display projector assembly is configured to present an augmented-reality experience via a portion of the optical stack at a pair of augmented-reality glasses.

2. The display assembly of any preceding claim, wherein the first interface material is segmented and configured such that the optical stack couples to a frame of the augmented-reality-glasses via segments of the first interface material.

3. The display assembly of any preceding claim, wherein the first interface material is continuous and configured such that the optical stack couples to the frame of the augmented-reality-glasses via the first interface material.

4. The display assembly of any preceding claim, wherein the first interface material and/or the second interface material are configured to reduce the transmission of vibrations to the optical stack and/or the display projector assembly, respectively.

5. The display assembly of any preceding claim, wherein the first interface material has a first shore value that is higher than a second shore value of the second interface material.

6. The display assembly of any preceding claim, wherein a stiffness of the first interface material is based on a mass of the optical stack and a stiffness of the second interface material is based on a mass of the display projector assembly.

7. The display assembly of any preceding claim, wherein the optical stack includes:
a waveguide configured to display an image;
a first lens configured to adjust the image from the waveguide so that it appears a specified distance from a user; and
a second lens configured to counteract the first lens such that a worldview, distinct from the image, is not distorted when viewed through both the first lens and the second lens, wherein the waveguide is between the first lens and the second lens;
preferably wherein the optical stack further includes an eye tracking device including an eye-tracking sensor and a plurality of light sources at a perimeter of the optical stack.

8. The display assembly of any preceding claim, wherein the first interface material is configured to prevent water intrusion into the optical stack and/or the second interface material is configured to prevent water intrusion into the display projector assembly.

9. The display assembly of any preceding claim, wherein the first interface material is a high-density foam, and the second interface material is a low-density foam;
preferably wherein the first interface material and/or the second interface material is a graphite-based material.

10. The display assembly of any preceding claim, wherein the display projector assembly is suspended within a frame of the augmented-reality-glasses via the second interface material such that one or more airgaps are formed between the display projector assembly and the frame of the augmented-reality glasses; or
wherein the display projector assembly is suspended within a lug between the frame and a hinge for a temple arm.

11. The display assembly of any preceding claim, wherein the second interface material is air such that the portion of the display projector assembly is suspended in air.

12. A pair of augmented-reality glasses, comprising:
an optical stack including:
a waveguide having an alignment fiducial;
a first lens aligned with the waveguide via the alignment fiducial;
a second lens aligned with the waveguide via the alignment fiducial;
a display projector assembly configured to be coupled to the optical stack via the alignment fiducial, wherein the optical stack and the display projector assembly are configured to present an augmented-reality experience at the pair of augmented-reality glasses; and
a frame, wherein the alignment fiducial aligns the optical stack within the frame.

13. The augmented-reality glasses of claim 12, wherein inserting the optical stack into the frame of the augmented-reality glasses maintains alignment of the optical stack via the alignment fiducial such that the first lens, the second lens, and the waveguide remain aligned;
preferably wherein inserting the optical stack into the frame of the augmented-reality glasses further maintains alignment of the optical stack and the display projector assembly.

14. The augmented-reality glasses of claim 12 or claim 13, wherein the alignment fiducial is configured to maintain alignment of the optical stack, display projector assembly, and frame during a drop event impacting the pair of augmented-reality glasses.

15. The augmented-reality glasses of any of claims 12 to 14, wherein the alignment fiducial is a first alignment fiducial, and the waveguide includes a second alignment fiducial for alignment of the first lens, the second lens, the display projector assembly, and/or the frame;
preferably wherein the first alignment fiducial and the second alignment fiducial constrain the relative three-dimensional orientations of the optical stack, the display projector assembly, and the frame.
